# NEUE EUROPÄISCHE PATENTSCHRIFT

(11) **EP 2 440 599 B2**
(45) Veröffentlichungstag und Bekanntmachung des Hinweises auf die Entscheidung über den Einspruch: **22.02.2017**
(45) Hinweis auf die Patenterteilung: 02.10.2013
(21) Anmeldenummer: 10724452.7
(22) Anmeldetag: 02.06.2010
(51) Int. Cl.: C08G 75/23

(54) **VERFAHREN ZUR HERSTELLUNG VON POLYARYLENETHER-BLOCKCOPOLYMEREN**
METHOD FOR PRODUCING POLY(ARYLENE ETHER) BLOCK COPOLYMERS
PROCÉDÉ DE PRODUCTION DE COPOLYMÈRES SÉQUENCÉS D'ÉTHER DE POLYARYLÈNE

(30) Priorität: 08.06.2009 EP 09162139
(43) Veröffentlichungstag der Anmeldung: 18.04.2012
(73) Patentinhaber: BASF SE, 67056 Ludwigshafen am Rhein (DE)
(72) Erfinder: WEBER, Martin, 67487 Maikammer (DE); SCHMIDT, Christian, 67061 Ludwigshafen (DE); KHVOROST, Alexander, Moskau 119454 (RU); GIBON, Cecile, 68159 Mannheim (DE); MALETZKO, Christian, 67122 Altrip (DE)
(74) Vertreter: Baier, Martin
(86) Internationale Anmeldenummer: PCT/EP2010/057676
(87) Internationale Veröffentlichungsnummer: WO 2010/142585

(56) Entgegenhaltungen:
- EP-A1- 0 000 361
- EP-A1- 0 336 159
- EP-A2- 0 243 831
- EP-A2- 0 479 192
- WO-A1-00/18824
- WO-A1-2005/095491
- WO-A1-2009/127614
- WO-A2-01/66620
- DE-A1- 1 957 091
- JP-A- 2003 096 219
- JP-A- 2003 155 361
- US-A- 4 777 235
- US-A- 5 212 264
- US-A1- 2003 105 173
- US-A1- 2005 069 780

## Beschreibung

Die vorliegende Erfindung betrifft ein Verfahren zur Herstellung von Polyarylenether-Blockcopolymeren umfassend in einer ersten Stufe die Umsetzung mindestens einer aromatischen Dihydroxyverbindung umfassend 4,4'-Dihydroxybiphenyl in molarem Überschuss und mindestens einer aromatischen Dihalogenverbindung unter Bildung eines Polybiphenylsulfon-Polymers, und anschließend in einer zweiten Stufe die Umsetzung des Polybiphenylsulfon-Polymers mit mindestens einer aromatischen Dihydroxyverbindung und mindestens einer aromatischen Dihalogenverbindung, wobei die aromatische Dihalogenverbindung ausgewählt ist aus 4,4'-Dihalogendiphenylsulfonen

Die so erhältlichen Polyarylensulfon-Blockcopolymere werden für die Herstellung von Formkörpern, Fasern, Filmen oder Schäumen verwendet.

Polybiphenylsulfon-Polymere gehören zur Gruppe der Polyarylenether, und damit zur Klasse der Hochleistungsthermoplaste. Neben der hohen Wärmeformbeständigkeit weisen die Polybiphenylsulfon-Polymere eine überragende Kerbschlagzähigkeit und exzellentes Brandverhalten auf.

Die Herstellung von Polybiphenylsulfon-Polymeren ist beispielsweise aus der DE 1957091 und der EP 000361 bekannt. Die WO 2000/018824 offenbart ein Verfahren zur Herstellung von Polybiphenylsulfon-Polymeren mit einem geringen Anteil cyclischer Oligomere. Die EP 1272547 beschreibt Polybiphenylsulfon-Polymere mit besonders geringer Eigenfarbe, erhalten durch äquimolare Kondensation der Monomere 4,4'-Dihydroxybiphenyl und 4,4'-Dichlordiphenylsulfon in Anwesenheit feinteiliger Pottasche.

Aus der WO 2005/095491 ist bekannt, dass Blockcopolymere mit unterschiedlichen Polyarylenethersegmenten durch Kopplung separat hergestellter Blöcke hergestellt werden können. Neben dem großen Aufwand bei der technischen Umsetzung dieser Synthesestrategie stellt vor allem die mangelnde Kontrolle der Stöchiometrie ein Nachteil dieser Methode dar, vor allem dann, wenn Blöcke mit Molekulargewichten von mehr als 5000 g/mol gekoppelt werden sollen, da die Bestimmung der jeweiligen Blocklängen fehlerbehaftet ist, was die notwendige Genauigkeit bei der Einstellung der Blocklängen und zugänglichen Molekulargewichte oft einschränkt oder verhindert.

Die nach dem Stand der Technik erhältlichen Polybiphenylsulfon-Blockcopolymere weisen außerdem eine in vielen Fällen unzureichende Kerbschlagzähigkeit sowie oft unzureichende optische Eigenschaften auf.

Es war daher eine Aufgabe der vorliegenden Erfindung, ein Verfahren zur Herstellung von Blockcopolymeren mit Blöcken aus Polybiphenylsulfon und anderen Polyarylenethern zur Verfügung zu stellen, welches einfach in der Durchführung ist. Das Verfahren sollte zudem die Herstellung besonders hochmolekularer Polybiphenylsulfon-Blockcopolymere ermöglichen.

Es war darüber hinaus eine Aufgabe der vorliegenden Erfindung, Polybiphenylsulfon-Blockcopolymere zur Verfügung zu stellen, welche überlegene mechanische Eigenschaften, insbesondere eine hohe Kerbschlagzähigkeit aufweisen. Die Polybiphenylsulfon-Blockcopolymere sollten außerdem gegenüber den bekannten Blockcopolymeren verbesserte optische Eigenschaften aufweisen, insbesondere eine höhere Transparenz und eine geringere Streuung von Licht.

Die vorliegende Aufgabe wird gelöst durch ein Verfahren zur Herstellung von Polyarylenether-Blockcopolymeren gemäß Anspruch 1.

Unter Polybiphenylsulfon-Polymer sollen Polyethersulfone verstanden werden, welche 4,4'-Dihydroxybiphenyl als Monomereinheit umfassen. Polybiphenylsulfon selbst ist auch als Polyphenylensulfon bekannt, wird als PPSU bezeichnet, und ist aus den Monomereinheiten 4,4'-Dichlordiphenylsulfon und 4,4'-Dihydroxybiphenyl aufgebaut.

Bevorzugte Ausführungsformen der vorliegenden Erfindung werden im Folgenden näher erläutert. Einzelne bevorzugte Ausführungsformen können mit anderen kombiniert werden, ohne den Rahmen der vorliegenden Erfindung zu verlassen.

### Schritt (a)

Erfindungsgemäß besteht Komponente (A1) aus mindestens einer aromatischen Dihydroxyverbindung und umfasst 4,4'-Dihydroxybiphenyl. Darüber hinaus kann Komponente (A1) außerdem folgende Verbindungen umfassen:
- Dihydroxybenzole, insbesondere Hydrochinon und Resorcin;
- Dihydroxynaphthaline, insbesondere 1,5-Dihydroxynaphthalin, 1,6-Dihydroxynaphthalin, 1,7-Dihydroxynaphthalin, und 2,7-Dihydroxynaphthalin;
- Andere Dihydroxybiphenyle als 4,4'-Biphenol, insbesondere 2,2'-Biphenol;
- Bisphenylether, insbesondere Bis(4-hydroxyphenyl)ether und Bis(2-hydroxyphenyl)ether;
- Bisphenylpropane, insbesondere 2,2-Bis(4-hydroxyphenyl)propan, 2,2-Bis(3-methyl-4-hydroxyphenyl)propan, und 2,2-Bis(3,5-dimethyl-4-hydroxyphenyl)propan;
- Bisphenylmethane, insbesondere Bis(4-hydroxyphenyl)methan
- Bisphenylcyclohexane, insbesondere Bis(4-hydroxyphenyl)-2,2,4-trimethylcyclohexan;
- Bisphenylsulfone, insbesondere Bis(4-hydroxyphenyl)sulfon;
- Bisphenylsulfide, insbesondere Bis(4-hydroxyphenyl)sulfid;
- Bisphenylketone, insbesondere Bis(4-hydroxyphenyl)keton;
- Bisphenylhexafluoropropane, insbesondere 2,2-Bis(3,5-dimethyl-4-hydroxyphenyl)hexafluoropropan; und
- Bisphenylfluorene, insbesondere 9,9-Bis(4-hydroxyphenyl)fluoren.

Vorzugsweise enthält die Komponente (A1) mindestens 50, insbesondere mindestens 60, besonders bevorzugt mindestens 80 Gew.-% 4,4'-Dihydroxybiphenyl. Ganz besonders bevorzugt ist die Komponente (A1) 4,4'-Dihydroxybiphenyl, so dass Polyphenylensulfon (PPSU) als Reaktionsprodukt gemäß Schritt (a) resultiert.

Erfindungsgemäß besteht Komponente (A2) aus mindestens einer aromatischen Dihalogenverbindung.

Geeignete aromatische Dihalogenverbindungen sind dem Fachmann bekannt. Geeignete Verbindungen (A2) sind insbesondere Dihalogendiphenylsulfone wie 4,4'-Dichlordiphenylsulfon, 4,4'-Difluordiphenylsulfon, 4,4'-Dibromdiphenylsulfon, bis(2-chlorophenyl)sulfone, 2,2'-Dichlordiphenylsulfon und 2,2'-Difluordiphenylsulfon.

Vorzugsweise werden die aromatischen Verbindungen der Komponente (A2) ausgewählt aus 4,4'-Dihalogendiphenylsulfonen, insbesondere 4,4'-Dichlordiphenylsulfon oder 4,4'-Difluordiphenylsulfon.

In einer ganz besonders bevorzugten Ausführungsform ist Komponente (A2) 4,4'-Dichlordiphenylsulfon.

Das molare Verhältnis der Komponente (A1) zu (A2) in Schritt (a) beträgt vorzugsweise von 1,005 zu 1 bis 1,2 zu1. Die Verwendung eines Überschusses der Komponente (A1) dient zur Bereitstellung reaktiver funktioneller Gruppen, die in Schritt (b) des erfindungsgemäßen Verfahrens weiter umgesetzt werden. Der Überschuss der Komponente (A1) trägt außerdem dazu bei, insbesondere bei hohen Umsätzen den Gehalt an polymergebundenem Chlor zu reduzieren.

Das molare Verhältnis der Komponenten (A1) zu (A2) beträgt insbesondere von 1,005 bis 1,1. In einer besonders bevorzugten Ausführungsform beträgt das molare Verhältnis der Komponenten (A1) zu (A2) von 1,005 bis 1,08, insbesondere von 1,01 bis 1,05, ganz besonders bevorzugt von 1,015 bis 1,04. Hierdurch lässt sich das Molekulargewicht besonders effektiv steuern und kontrollieren.

Es ist für die vorliegende Erfindung von Vorteil, die Reaktionsbedingungen in Schritt (a) so zu wählen, dass der Umsatz (U) mindestens 90%, insbesondere mindestens 95%, besonders bevorzugt mindestens 98% beträgt. Unter Umsatz U wird im Rahmen der vorliegenden Erfindung der molare Anteil der umgesetzten reaktiven Gruppen (d. h. Hydroxy- und Chlorgruppen) verstanden.

Die Umsetzung in Schritt (a) erfolgt vorzugsweise in einem Lösungsmittel, welches NMP (N-Methyl-2-pyrrolidon) umfasst.

Es wurde überraschenderweise gefunden, dass ein besonders niedriger Gehalt an polymergebundenem Chlor gefunden wird, wenn als Lösungsmittel ein solches verwendet wird, das N-Methyl-2-pyrrolidon umfasst. N-Methyl-2-pyrrolidon ist als Lösungsmittel ganz besonders bevorzugt. N-Methyl-2-pyrrolidon trägt gleichzeitig zu einem hohen Umsatz der Komponenten (A1) und (A2) bei, da die Reaktion der erfindungsgemäß zum Einsatz kommenden Monomere besonders effizient verläuft.

Im Rahmen der vorliegenden Erfindung alternativ zu oder in Mischung mit N-Methyl-2-pyrrolidon (NMP) verwendbare Lösungsmittel sind andere aprotische polare Lösungsmittel als NMP. Geeignete Lösungsmittel weisen dabei einen Siedepunkt im Bereich von 80 bis 320°C, insbesondere 100 bis 280°C, bevorzugt von 150 bis 250°C auf. Geeignete aprotische polare Lösungsmittel sind beispielsweise hochsiedende Ether, Ester, Ketone, asymmetrisch halogenierte Kohlenwasserstoffe, Anisol, Dimethylformamid, Dimethylsulfoxid, N-Ethyl-2-pyrrolidon und Sulfolan. N-Methyl-2-pyrrolidon (NMP) ist als Lösungsmittel jedoch besonders bevorzugt.

Die Umsetzung der Ausgangsverbindungen erfolgt in Gegenwart einer Base (Ba), um die Reaktivität gegenüber den Halogensubstituenten der Ausgangsverbindungen (A2) zu erhöhen. Es ist bevorzugt ausgehend von den vorgenannten aromatischen Dihydroxyverbindungen (A1) durch Zugabe einer Base (Ba) ihre Dikalium- oder Dinatriumsalze herzustellen und mit der Komponente (A2) zur Reaktion zu bringen.

Die Base (Ba) wird vorzugsweise in einem molaren Verhältnis von 1 bis 1,3 in Bezug auf die molare Menge der Komponente (A1) eingesetzt.

Geeignete Basen sind wasserfreies Alkalicarbonat, vorzugsweise Natrium-, Kalium-, Calciumcarbonat oder Mischungen davon, wobei Kaliumcarbonat ganz besonders bevorzugt ist, insbesondere feinteiliges Kaliumcarbonat. Eine besonders bevorzugte Kombination ist N-Methyl-2-pyrrolidon als Lösungsmittel und Kaliumcarbonat als Base.

Die Umsetzung der Ausgangsverbindungen (A1) und (A2) wird bei einer Temperatur von 80 bis 250°C, bevorzugt 100 bis 220°C durchgeführt, wobei die Obergrenze der Temperatur durch den Siedepunkt des Lösungsmittels begrenzt wird.

Die Umsetzung erfolgt vorzugsweise in einem Zeitintervall von 1 bis 12 h, insbesondere von 3 bis 8 h.

Es hat sich zudem als vorteilhaft herausgestellt, im Rahmen von Schritt (a) die Menge des Polybiphenylsulfon-Polymers bezogen auf das Gesamtgewicht der Mischung aus Polybiphenylsulfon-Polymer und Lösungsmittel von 10 bis 70 Gew.-%, vorzugsweise von 15 bis 50 Gew.-% einzustellen.

### Schritt (b)

Komponente (B1) besteht erfindungsgemäß aus mindestens einer aromatischen Dihydroxyverbindung. Geeignete aromatische Dihydroxyverbindungen sind dem Fachmann bekannt und entsprechenden den unter Komponente (A1) aufgeführten Verbindungen.

Vorzugsweise umfasst Komponente (B1) jedoch kein 4,4'-Dihydroxybiphenyl.

Als Komponente (B1) bevorzugte aromatische Dihydroxyverbindungen sind insbesondere:
- Dihydroxybenzole, insbesondere Hydrochinon und Resorcin;
- Dihydroxynaphthaline, insbesondere 1,5-Dihydroxynaphthalin, 1,6-Dihydroxynaphthalin, 1,7-Dihydroxynaphthalin, und 2,7-Dihydroxynaphthalin;
- Andere Dihydroxybiphenyle als 4,4'-Biphenol, insbesondere 2,2'-Biphenol;
- Bisphenylether, insbesondere Bis(4-hydroxyphenyl)ether und Bis(2-hydroxyphenyl)ether;
- Bisphenylpropane, insbesondere 2,2-Bis(4-hydroxyphenyl)propan, 2,2-Bis(3-methyl-4-hydroxyphenyl)propan, und 2,2-Bis(3,5-dimethyl-4-hydroxyphenyl)propan;
- Bisphenylmethane, insbesondere Bis(4-hydroxyphenyl)methan
- Bisphenylcyclohexane, insbesondere Bis(4-hydroxyphenyl)-2,2,4-trimethylcyclohexan;
- Bisphenylsulfone, insbesondere Bis(4-hydroxyphenyl)sulfon;
- Bisphenylsulfide, insbesondere Bis(4-hydroxyphenyl)sulfid;
- Bisphenylketone, insbesondere Bis(4-hydroxyphenyl)keton;
- Bisphenylhexafluoropropane, insbesondere 2,2-Bis(3,5-dimethyl-4-hydroxyphenyl)hexafluoropropan; und
- Bisphenylfluorene, insbesondere 9,9-Bis(4-hydroxyphenyl)fluoren.

Komponente (B1) ist besonders bevorzugt 4,4'-Dihydroxydiphenylsulfon.

Komponente (B2) besteht erfindungsgemäß aus mindestens einer aromatischen Dihalogenverbindung.

Als Komponente (B2) werden 4,4'-Dihalogendiphenylsulfone wie 4,4'-Dichlordiphenylsulfon, 4,4'-Difluordiphenylsulfon und 4,4'-Dibromdiphenyjsulfon eingesetzt.

Erfindungsgemäß werden die aromatischen Dihalogenverbindungen (B2) ausgewählt aus 4,4'-Dihalogendiphenylsulfonen, insbesondere 4,4'-Dichlordiphenylsulfon und 4,4'-Difluordiphenylsulfon.

Ganz besonders bevorzugt ist Komponente (B2) 4,4'-Dichlordiphenylsulfon.

Die Durchführung von Verfahrensschritt (b) erfolgt analog zu Schritt (a).

Im Rahmen von Schritt (b) erfolgt die Zugabe der Komponenten (B1) und (B2) unmittelbar zu der Reaktionsmischung aus Schritt (a). Außerdem wird vorzugsweise die Base (Ba) unmittelbar zu der Reaktionsmischung aus Schritt (a) zugegeben.

Es ist ein Vorteil des erfindungsgemäßen Verfahrens, dass es erlaubt, die Blocklängen der Blöcke und insbesondere die Blocklänge der Polybiphenylsulfonpolymer-Blöcke gezielt einzustellen. Dies führt zu einer hohen Einheitlichkeit der resultierenden Blockcopolymere ermöglicht die gezielte Steuerung bzw. Einstellung ihrer physikalischen Eigenschaften.

Hierzu erfolgt die Berechnung der jeweiligen Mengen der Komponenten (B1), (B2) und Base (Ba) unter Berücksichtigung der mittleren Blocklänge und Gewichtsmenge der in Schritt (a) polykondensierten Komponenten. Unter der Annahme, dass die Umsetzung im Schritt (a) quantitativ erfolgt (und ohne Berücksichtigung sich potentiell bildender Zyklen), werden die Werte für das zahlenmittlere Molekulargewicht Mn und die Menge an Polymer berechnet und als Bezugsgrößen verwendet. Ausgehend von diesen Werten berechnet der Fachmann die bereits vorliegende Menge an Hydroxy-Gruppen nach bekannten Methoden. Der Fachmann kennt nun bei der Ausführung des erfindungsgemäßen Verfahrens die mittlere Blocklänge und die Anzahl der Hydroxygruppen der Polybiphenylsulfonpolymer-Blöcke und wählt die Menge der Komponenten (B1) und (B2) entsprechend der gewünschten Blocklängen für die aus Schritt (b) resultierenden Blöcke. Die mittlere Blocklänge der aus Schritt (b) resultierenden Blöcke unterliegt der dem Fachmann bekannten Statistik der Polykondensation.

Das erfindungsgemäße Verfahren führt vorzugsweise zu Blockcopolymeren mit definierter Multiblockstruktur.

Das molare Verhältnis der Komponente (B2) zur Komponente (B1) beträgt vorzugsweise von 1 bis 1,2, insbesondere von 1,005 bis 1,1 und besonders bevorzugt von 1,01 bis 1,05. Je höher das molare Verhältnis, desto geringer ist die Blocklänge des Blockes, welcher aus Komponente (B1) und (B2) resultiert. Die entsprechenden Zusammenhänge sind dem Fachmann bekannt.

Die molare Menge der Komponenten (B1) und (B2) im Verhältnis zur molaren Menge der Komponenten (A1) und (A2) wählt der der Fachmann so, dass er die gewünschte Blocklänge der Blöcke aus Schritt (a) im Verhältnis zu den Blöcken aus Schritt (b) erhält.

Die Umsetzung der Ausgangsverbindungen erfolgt analog Schritt (a) vorzugsweise in Gegenwart einer Base (Ba), um die Reaktivität gegenüber den Halogensubstituenten der Ausgangsverbindungen (B2) zu erhöhen. Es ist bevorzugt ausgehend von den vorgenannten aromatischen Dihydroxyverbindungen (B1) zunächst durch Zugabe einer Base (Ba) ihre Dikalium- oder Dinatriumsalze herzustellen und anschließend mit der Komponente (B2) zur Reaktion zu bringen.

Vorzugsweise sind die Basen wasserfrei. Geeignete Basen sind insbesondere wasserfreies Alkalicarbonat, vorzugsweise Natrium-, Kalium-, Calciumcarbonat oder Mischungen davon, wobei Kaliumcarbonat ganz besonders bevorzugt ist, insbesondere feinteiliges Kaliumcarbonat. Eine besonders bevorzugte Kombination ist N-Methyl-2-pyrrolidon als Lösungsmittel und Kaliumcarbonat als Base.

Die Base (Ba) wird vorzugsweise im Überschuss in einem molaren Verhältnis von 1,01 bis 1,3 in Bezug auf Komponente (B1) verwendet.

Die Umsetzung der Ausgangsverbindungen (B1) und (B2) sowie das Reaktionsprodukt aus Schritt (a) erfolgt üblicherweise bei einer Temperatur von 80 bis 250°C, bevorzugt 100 bis 220°C durchgeführt, wobei die Obergrenze der Temperatur durch den Siedepunkt des Lösungsmittels begrenzt wird.

Die Umsetzung gemäß Schritt (b) erfolgt vorzugsweise in einem Zeitintervall von 1 bis 12 h, insbesondere von 3 bis 8 h.

Es hat sich zudem als vorteilhaft herausgestellt, im Rahmen von Schritt (b) die Menge des resultierenden Polyarylenether-Blockcopolymeren bezogen auf das Gesamtgewicht der Mischung aus Polybiphenylsulfon-Polymer und Lösungsmittel von 10 bis 80 Gew.-%, vorzugsweise von 15 bis 50 Gew.-% einzustellen.

In einer weiteren bevorzugten Ausführungsform, die mit den vorgenannten Ausführungsformen vorteilhaft verknüpft werden kann, erfolgt in Anschluss an Schritt (b) gemäß Schritt (c) eine Umsetzung mit mindestens einer organischen Halogenverbindung. Hierdurch werden reaktive Hydroxy-Endgruppen weiter umgesetzt und so ein weiterer Aufbau der Polymerkette während der Verarbeitung verhindert.

Die organische Halogenverbindung ist vorzugsweise ein Alkylhalogenid, insbesondere ein Alkylchlorid, besonders bevorzugt Methylhalogenid, insbesondere Methylchlorid.

Es hat sich als vorteilhaft erwiesen, in Anschluss an Schritt (b) und ggf. Schritt (c) eine Filtration der Polymerlösung durchzuführen. Hierdurch wird der bei der Polykondensation gebildete Salzanteil sowie eventuell gebildete Gelkörper entfernt.

Die Gewinnung des Blockcopolymers erfolgt vorzugsweise durch Fällung in einem geeigneten Fällungsmittel. Als Fällungsmittel wird insbesondere ein Gemisch aus Wasser und NMP verwendet, vorzugsweise ein Gemisch aus Wasser und NMP im Verhältnis von 5 zu 1 bis 15 zu 1. Das so erhaltene Produkt wird üblicherweise anschließend gewaschen und getrocknet. Entsprechende Methoden zur Trocknung sind dem Fachmann bekannt.

Die so erhältlichen Polybiphenylsulfon-Blockcopolymere weisen vorzugsweise einen Gehalt an polymergebundenem Chlor von weniger als 800 ppm, insbesondere weniger als 750 ppm, besonders bevorzugt weniger als 700 ppm auf. Die untere Grenze des Gehaltes an polymergebundenem Chlor beträgt verfahrensbedingt üblicherweise mindestens 400 ppm, insbesondere mindestens 500 ppm.

Der Chlorgehalt des erhältlichen Polymers entspricht dem Gehalt an Chlorendgruppen und wird im Rahmen der vorliegenden Erfindung mittels Atomspektroskopie bestimmt. Der Gehalt an polymergebundenem Chlor bezieht sich im Rahmen der vorliegenden Erfindung grundsätzlich auf den Gewichtsanteil und kann alternativ in mg pro kg Einwaage des Polymers angegeben werden.

Polymerzusammensetzungen, welche nach dem erfindungsgemäßen Verfahren erhältlich sind, weisen besonders bevorzugt einen Gehalt an polymergebundenem Chlor von weniger als 700 ppm und gleichzeitig einen Anteil an Restlösungsmittel von weniger als 500 ppm auf.

Die so erhältlichen Polyarylensulfon-Blockcopolymere eignen sich insbesondere zur Herstellung von Formteilen, Fasern, Filmen oder Schäumen.

Die folgenden Beispiele erläutern die Erfindung näher, ohne sie einzuschränken.

### Beispiele

Die Viskositätszahl der Polyphenylensulfone wurde in 1 %-iger Lösung von N-Methylpyrrolidon bei 25°C bestimmt.

Die Zugversuche wurden nach ISO 527 durchgeführt, die Kerbschlagzähigkeit wurde nach ISO 179 1eA bestimmt.

Die verwendeten Monomere (4,4'-Dichlordiphenylsulfon, 4,4'-Dihydroxybiphenyl, 4,4'-Dihydroxydiphenylsulfon) hatten eine Reinheit von mehr als 99,5 %.

### Vergleichsbeispiel V1

Herstellung eines Blockcopolymeren umfassend PPSU und Polyethersulfon (PPSU-b-PES) im 2-stufigen Verfahren

### a) Synthese PPSU mit OH-Gruppen

PPSU wurde durch nucleophile aromatische Polykondensation von 551,62 g (1,9215 mol) 4,4'-Dichlordiphenylsulfon, 372,42 g (2,000 mol) 4,4'-Dihydroxybiphenyl, unter Einwirkung von 284,71 g (2,06 mol) Kaliumcarbonat in 2000 ml NMP erhalten. Diese Mischung wurde 6 Stunden bei 180°C gehalten. Danach wurde der Ansatz durch Zugabe von 1000 ml NMP verdünnt. Nach Abkühlen auf 80°C wurde die Suspension abgelassen.

Ein Teil des Materials wurde aufgearbeitet, d.h. die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet.

Das Produkt hatte eine VZ von 44,5 ml/g und 0,019 Gew.-% Cl sowie 0,22 Gew.-% OH. Unter Annahme, dass keine weiteren Endgruppen vorliegen, ergab sich damit ein zahlengewichtetes mittleres Molekulargewicht (Mn) von 15313 g/mol.

### b) Synthese PES mit Cl-Endgruppen

PES wurde durch nucleophile aromatische Polykondensation von 574,16 g (2,000 mol) 4,4'-Dichlordiphenylsulfon, 477,64 g (1,9092 mol) 4,4'-Dihydroxydiphenylsulfon, unter Einwirkung von 290,24 g (2,100 mol) Kaliumcarbonat in 1050 ml NMP erhalten. Diese Mischung wurde 8 Stunden bei 190°C gehalten. Danach wurde der Ansatz durch Zugabe von 1950 ml NMP verdünnt. Nach Abkühlen auf 80°C wurde die Suspension abgelassen. Ein Teil des Materials wurde aufgearbeitet, d.h. die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet.

Das Produkt hatte eine VZ von 41,5 ml/g und 0,576 Gew.-% Cl sowie 0,010 Gew.-% OH. Unter Annahme, dass keine weiteren Endgruppen vorliegen ergab sich damit ein Mn von 11913 g/mol

### Synthese des Blockcopolymeren

632,88 g Suspension aus a) (15,57 mmol OH) und 421,46 g Suspension aus b) (15,57 mmol Cl) wurden in einem 4-I Kolben vereinigt und für 4 Stunden auf 190°C erhitzt. Während der Reaktionszeit wurde jede Stunde eine Probe gezogen und die VZ ermittelt. Nach 4 Stunden wurde die Suspension auf 130°C abgekühlt und dann wurde für eine Stunde Methylchlorid eingeleitet (15 l/h) abgekühlt und abgelassen. Anschließend wurden die festen Bestandteile durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet.

Die Eigenschaften dieses Produkts sind in Tabelle 1 aufgeführt.

### Vergleichsbeispiel V2

### Herstellung von PPSU-b-PES im 2-stufigen Verfahren

### a) Synthese PPSU mit OH-Gruppen

PPSU wurde durch nucleophile aromatische Polykondensation von 529,95 g (1,846 mol) 4,4'-Dichlordiphenylsulfon, 372,42 g (2,000 mol) 4,4'-Dihydroxybiphenyl, unter Einwirkung von 284,71 g (2,06 mol) Kaliumcarbonat in 2000 ml NMP erhalten. Diese Mischung wurde 6 Stunden bei 180°C gehalten. Danach wurde der Ansatz durch Zugabe von 1000 ml NMP verdünnt. Nach Abkühlen auf 80°C wurde die Suspension abgelassen.

Ein Teil des Materials wurde aufgearbeitet, d.h. die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet.

Das Produkt hatte eine VZ von 25,3 ml/g und 0,009 Gew.-% Cl sowie 0,67 Gew.-% OH. Unter Annahme, dass keine weiteren Endgruppen vorliegen ergab sich damit ein Mn von 5042 g/mol

### b) Synthese PES mit Cl-Endgruppen

PES wurde durch nucleophile aromatische Polykondensation von 574,16 g (2,000 mol) 4,4'-Dichlordiphenylsulfon, 455,94 g (1,8225 mol) 4,4'-Dihydroxydiphenylsulfon, unter Einwirkung von 290,24 g (2,100 mol) Kaliumcarbonat in 1050 ml NMP erhalten. Diese Mischung wurde 8 Stunden bei 190°C gehalten. Danach wurde der Ansatz durch Zugabe von 1950 ml NMP verdünnt. Nach Abkühlen auf 80°C wurde die Suspension abgelassen. Ein Teil des Materials wurde aufgearbeitet, d.h. die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet.

Das Produkt hatte eine VZ von 25,5 ml/g und 1,19 Gew.-% Cl sowie 0,010 Gew.-% OH. Unter Annahme, dass keine weiteren Endgruppen vorliegen ergab sich damit ein Mn von 5857 g/mol

### Synthese des Blockcopolymeren PPSU-b-PES 5k/5k

625,90 g Suspension aus a) (46,90 mmol OH) und 609,31 g Suspension aus b) (46,90 mmol Cl) wurden in einem 4-I Kolben vereinigt und für 4 Stunden auf 190°C erhitzt. Während der Reaktionszeit wurde jede Stunde eine Probe gezogen und die VZ ermittelt. Nach 4 Stunden wurde die Suspension auf 130°C abgekühlt und dann wurde für eine Stunde Methylchlorid eingeleitet (15 l/h) abgekühlt und abgelassen.

Anschließend wurden die festen Bestandteile durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet.

Die Eigenschaften dieses Produkts sind in Tabelle 1 aufgeführt.

### Beispiel 3: Synthese von Blockcopolymeren im einstufigen Prozess (PPSU-b-PES 10k/10k)

Zuerst wurde ein PPSU durch Umsetzung von 275,81 g (0,9607 mol) 4,4'-Dichlordiphenylsulfon, 186,21 g (1,000 mol) 4,4'-Dihydroxybiphenyl, unter Einwirkung von 142,36 g (1,03 mol) Kaliumcarbonat in 1000 ml NMP bei 180°C hergestellt, Reaktionsdauer 6 h. Dann wurden weitere 500 ml NMP sowie 287,08 g (1,0000 mol) 4,4'-Dichlordiphenylsulfon, 238,82 g (0,9546 mol) 4,4'-Dihydroxydiphenylsulfon und 145,12 g Kaliumcarbonat zugegeben. Bei 190°C wurde die Suspension dann weitere 6 h gerührt. Dann wurde der Ansatz auf 130°C abgekühlt und für 1 h mit Methylchlorid umgesetzt (15 l/h). Dann wurde der Ansatz mit 1500 ml NMP verdünnt und nach Abkühlen auf 80°C wird die Suspension abgelassen.

Die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet.

Die Eigenschaften des Produkts sind in Tabelle 1 aufgeführt.

### Beispiel 4: Synthese von Blockcopolymeren im einstufigen Prozess (PPSU-b-PES 5k/5k)

Zuerst wurde ein PPSU durch Umsetzung von 264,97 g (0,9230 mol) 4,4'-Dichlordiphenylsulfon, 186,21 g (1,000 mol) 4,4'-Dihydroxybiphenyl, unter Einwirkung von 142,36 g (1,03 mol) Kaliumcarbonat in 1000 ml NMP bei 190°C hergestellt, Reaktionsdauer 6 h. Dann wurden weitere 500 ml NMP sowie 287,08 g (1,0000 mol) 4,4'-Dichlordiphenylsulfon, 227,97 g (0,9113 mol) 4,4'-Dihydroxydiphenylsulfon und 145,12 g Kaliumcarbonat zugegeben. Bei 190°C wurde die Suspension dann weitere 6 h gerührt. Dann wurde der Ansatz auf 130°C abgekühlt und für 1 h mit Methylchlorid umgesetzt (15 l/h). Dann wurde der Ansatz mit 1500 ml NMP verdünnt und nach Abkühlen auf 80°C wurde die Suspension abgelassen.

Die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet.

Die Eigenschaften des Produkts sind in Tabelle 1 aufgeführt.

Die Viskositätszahl der Polymere wurde in 1 %-iger Lösung von N-Methylpyrrolidon bei 25°C bestimmt.

Die erhaltenen Produkte wurden bei einer Massetemperatur von 385°C in einem Zweischneckenextruder (PTW 18) granuliert. Die Verarbeitung zu Probekörpern erfolgte bei 385°C Massetemperatur und 160°C Werkzeugtemperatur.

Die Kerbschlagzähigkeit wurde nach ISO 179 1eA an ISO-Stäben bestimmt. Die Transparenz und die Streuung (Haze) wurden an Rundscheiben der Dicke 2 mm nach DIN 53236 (Transparenz) und ASTM D 1003 (Haze) ermittelt.

**Tabelle 1:**

| Versuch | V1 | V2 | 3 | 4 |
|---|---|---|---|---|
| Molgewicht Blöcke (theoret.) | 10k/10k | 5k/5k | 10k/10k | 5k/5k |
| VZ [ml/g] | 74,0 | 63,1 | 97,6 | 94,7 |
| ak [kJ/m²] | 11,9 | 10,8 | 20,2 | 18,9 |
| Transparenz [%] | 83,2 | 84,1 | 86,1 | 86,2 |
| Haze [%] | 6,8 | 6,7 | 4,2 | 3,9 |

Das erfindungsgemäße Verfahren ermöglicht somit die Herstellung hochmolekularer Polyarylenether-Copolymere mit hoher Kerbschlagzähigkeit. Außerdem weisen die nach dem erfindungsgemäßen Verfahren hergestellten Produkte auch bessere optische Eigenschaften auf.

## Patentansprüche

1. Verfahren zur Herstellung von Polyarylenether-Blockcopolymeren umfassend
(a) die Umsetzung der Komponenten
(A1) bestehend aus mindestens einer aromatischen Dihydroxyverbindung und
(A2) bestehend aus mindestens einer aromatischen Dihalogenverbindung unter Bildung eines Polybiphenylsulfon-Polymers, wobei die Komponente (A1) 4,4'-Dihydroxybiphenyl umfasst und die Umsetzung gemäß Schritt (a) mit einem molaren Überschuss der Komponente (A1) durchgeführt wird, und anschließend
(b) Umsetzung des Polybiphenylsulfon-Polymers mit den Komponenten
(B1) bestehend aus mindestens einer aromatischen Dihydroxyverbindung und
(B2) bestehend aus mindestens einer aromatischen Dihalogenverbindung wobei die Umsetzung der Ausgangsverbindungen in Gegenwart von wasserfreiem Alkalicarbonat erfolgt und wobei im Rahmen von Schritt (b) die Zugabe der Komponenten (B1) und (B2) unmittelbar zu der Reaktionsmischung aus Schritt (a) erfolgt und wobei die aromatische Dihalogenverbindung (B2) ausgewählt ist aus 4,4'-Dihalogendiphenylsulfonen.

2. Verfahren nach Anspruch 1, wobei das molare Verhältnis der Komponente (A1) zu (A2) in Schritt (a) von 1,005 zu 1 bis 1,2 zu 1 beträgt.

3. Verfahren nach Anspruch 1 oder 2, wobei Komponente (A1) mindestens 50 Gew.-% 4,4'-Dihydroxybiphenyl enthält.

4. Verfahren nach einem oder mehreren der Ansprüche 1 bis 3, wobei die Komponente (A1) 4,4'-Dihydroxybiphenyl ist.

5. Verfahren nach einem oder mehreren der Ansprüche 1 bis 4, wobei die Komponente (A2) 4,4'-Dichlordiphenylsulfon ist.

6. Verfahren nach einem oder mehreren der Ansprüche 1 bis 5, wobei die Komponente (B2) 4,4'-Dichlordiphenylsulfon ist.

7. Verfahren nach einem oder mehreren der Ansprüche 1 bis 6, wobei die Komponente (B1) 4,4'-Dihydroxydiphenylsulfon ist.

8. Verfahren nach einem oder mehreren der Ansprüche 1 bis 7, wobei die Umsetzung in Schritt (a) und in Schritt (b) in einem Lösungsmittel erfolgt, welches NMP umfasst.

9. Verfahren nach einem oder mehreren der Ansprüche 1 bis 8, wobei das wasserfreie Alkalicarbonat in einem molaren Verhältnis von 1 bis 1,3 in Bezug auf die molare Menge der Komponente (A1) eingesetzt wird.

10. Verfahren nach einem oder mehreren der Ansprüche 1 bis 9, wobei die Umsetzung der Ausgangsverbindungen (A1) und (A2) bei einer Temperatur von 80 bis 250 °C durchgeführt wird.

11. Verfahren nach einem oder mehreren der Ansprüche 1 bis 10, wobei die Umsetzung vorzugsweise in einem Zeitintervall von 1 bis 12 h erfolgt.

## Claims

1. A process for the production of polyarylene ether block copolymers comprising
(a) the reaction of components
(A1) composed of at least one aromatic dihydroxy compound
and
(A2) composed of at least one aromatic dihalogen compound
to form a polybiphenyl sulfone polymer, where component (A1) comprises 4,4'-dihydroxybiphenyl and the reaction according to step (a) is carried out with a molar excess of component (A1), and then
(b) reaction of the polybiphenyl sulfone polymer with components
(B1) composed of at least one aromatic dihydroxy compound
and
(B2) composed of at least one aromatic dihalogen compound,
where the reaction of the starting compounds takes place in the presence of anhydrous alkali metal carbonate and where, for the purposes of step (b), components (B1) and (B2) are added immediately to the reaction mixture from step (a) and where the aromatic dihalogen compound (B2) is selected from 4,4'-dihalodiphenyl sulfones.

2. The process according to claim 1, where the molar ratio of component (A1) to (A2) in step (a) is from 1.005 : 1 to 1.2 : 1.

3. The process according to claim 1 or 2, where component (A1) comprises at least 50% by weight of 4,4'-dihydroxybiphenyl.

4. The process according to one or more of claims 1 to 3, where component (A1) is 4,4'-dihydroxybiphenyl.

5. The process according to one or more of claims 1 to 4, where component (A2) is 4,4'-dichlorodiphenyl sulfone.

6. The process according to, one or more of claims 1 to 5, where component (B2) is 4,4'-dichlorodiphenyl sulfone.

7. The process according to one or more of claims 1 to 6, where component (B1) is 4,4'-dihydroxydiphenyl sulfone.

8. The process according to one or more of claims 1 to 7, where the reaction in step (a) and in step (b) takes place in a solvent which comprises NMP.

9. The process according to one or more of claims 1 to 8, where the anhydrous alkali metal carbonate is used in a molar ratio of from 1 to 1.3, based on the molar amount of component A1.

10. The process according to one or more of claims 1 to 9, where the reaction of the starting compounds (A1) and (A2) is carried out at a temperature of from 80 to 250°C.

11. The process according to one or more of claims 1 to 10, where the reaction preferably takes place within a period of from 1 to 12 h.

## Revendications

1. Procédé pour la préparation de copolymères séquencés polyarylène-éther, comprenant
(a) la mise en réaction des composants
(A1) consistant en au moins un composé dihydroxylé aromatique et
(A2) consistant en au moins un composé dihalogéné aromatique
avec formation d'un polymère polybiphénylsulfone, le composant (A1) comprenant le 4,4'-dihydroxybiphényle et la réaction selon l'étape (a) étant effectuée avec un excès molaire du composant (A1), et ensuite
(b) mise en réaction du polymère polybiphénylsulfone avec les composants
(B1) consistant en au moins un composé dihydroxylé aromatique et
(B2) consistant en au moins un composé dihalogéné aromatique
la réaction des composés de départ s'effectuant en présence d'un carbonate de métal alcalin anhydre et l'addition des composants (B1) et (B2) dans le cadre de l'étape (b) s'effectuant immédiatement au mélange réactionnel provenant de l'étape (a) et le composé dihalogéné aromatique (B2) étant choisi dans les 4,4'-dihalogénodiphénylsulfones.

2. Procédé selon la revendication 1, dans lequel le rapport molaire du composant (A1) à (A2) dans l'étape (a) vaut de 1,005:1 à 1,2:1.

3. Procédé selon la revendication 1 ou 2, dans lequel le composant (A1) contient au moins 50 % en poids de 4,4'-dihydroxybiphényle.

4. Procédé selon une ou plusieurs des revendications 1 à 3, dans lequel le composant (A1) est le 4,4'-dihydroxybiphényle.

5. Procédé selon une ou plusieurs des revendications 1 à 4, dans lequel le composant (A2) est la 4,4'-dichlorodiphénylsulfone.

6. Procédé selon une ou plusieurs des revendications 1 à 5, dans lequel le composant (B2) est la 4,4'-dichlorodiphénylsulfone.

7. Procédé selon une ou plusieurs des revendications 1 à 6, dans lequel le composant (B1) est la 4,4'-dihydroxydiphénylsulfone.

8. Procédé selon une ou plusieurs des revendications 1 à 7, dans lequel la réaction dans l'étape (a) et dans l'étape (b) s'effectue dans un solvant qui comprend la NMP.

9. Procédé selon une ou plusieurs des revendications 1 à 8, dans lequel on utilise le carbonate de métal alcalin anhydre en un rapport molaire de 1 à 1,3 par rapport à la quantité molaire du composant Al.

10. Procédé selon une ou plusieurs des revendications 1 à 9, dans lequel on effectue la réaction des composés de départ (A1) et (A2) à une température de 80 à 250 °C.

11. Procédé selon une ou plusieurs des revendications 1 à 10, dans lequel on effectue la réaction de préférence en un espace de temps de 1 à 12 h.
